Europäisches Patentamt

European Patent Office

Office européen des brevets

(19)

(11) EP 1 486 249 A1

(12) **EUROPEAN PATENT APPLICATION**

(43) Date of publication:
**15.12.2004 Bulletin 2004/51**

(51) Int Cl.⁷: **B01D 53/94**

(21) Application number: **04076562.0**

(22) Date of filing: **27.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **12.06.2003 US 461271**

(71) Applicant: **Delphi Technologies, Inc.**
**Troy, MI 48007 (US)**

(72) Inventor: **Dou, Danan**
**Tulsa, OK 74133 (US)**

(74) Representative: **Denton, Michael John et al**
**Delphi European Headquarters,**
**64 avenue de la Plaine de France,**
**Paris Nord II,**
**BP 60059,**
**Tremblay-en-France**
**95972 Roissy Charles de Gaulle Cédex (FR)**

(54) **Device for reducing emissions from diesel engines and methods for its production**

(57) A treatment element (14) for use in a diesel exhaust emissions stream comprising a diesel NOx catalyst and a NOx adsorber catalyst is described. The diesel NOx catalyst comprises a zeolite, such as an acidic zeolite. The diesel NOx catalyst, NOx adsorber catalyst, or both comprises a catalytic metal. Methods of making the treatment element are described. Also described is an exhaust emissions control device 10 comprising the above NOx adsorber.

# Fig.1.

**Description**

BACKGROUND OF THE INVENTION

This disclosure relates to $NO_X$ adsorber catalyst systems for reduction of the amount undesirable emissions components emitted in automotive exhaust gases and to methods of making $NO_X$ adsorber catalyst systems.

In order to meet exhaust gas emission standards, the exhaust emitted from internal combustion engines is treated prior to emission into the atmosphere. Typically, exhaust gases are routed through an exhaust emission control device disposed in fluid communication with the exhaust outlet system of the engine, where the gases are treated by reactions with one or more catalyst compositions deposited on a porous support material. The exhaust gases generally contain undesirable emission components including carbon monoxide (CO), hydrocarbons (HC), nitrogen oxide ($NO_X$) and particulate mater (PM). As a means of simultaneously removing the objectionable CO, HC, and $NO_X$ components, various "three-way" catalyst compositions have been developed. When operating under lean-burn conditions (i.e., where the air-to-fuel ratio is adjusted to be somewhat greater than the stoichiometric ratio), however, typical three-way catalyst systems are relatively efficient in oxidizing unburned HC and CO, but are inefficient in reducing $NO_X$ emission components. To treat nitrogen oxides in the exhaust gases of engines operating under lean-burn conditions, $NO_X$ adsorbers can be added in exhaust lines along with three-way catalysts.

$NO_X$ adsorbers can comprise catalytic metals such as platinum group metals, in combination with alkali elements or alkaline earth metals, or combinations thereof. The catalytic material in the adsorber acts first to oxidize NO to $NO_2$. The $NO_2$ then reacts with the alkali and alkaline earth materials to form nitrate salts.

Because diesel engine exhaust differs from gasoline powered engine exhaust, there are specific technical challenges in the development of NOx adsorbers for diesel engine applications. First, the temperature of diesel exhaust gas is significantly colder than gasoline exhaust (e.g., about 150°C to about 500°C for diesel exhaust compared to about 250°C to about 600°C for gasoline exhaust when operated in lean stratified mode). NOx adsorbers currently in use for gasoline engine applications are not sufficiently effective at temperatures below about 250°C. Second, a NOx adsorber catalyst for treatment of diesel exhaust should be resistant to unburned or partially burned diesel fuel and particulate matter (PM) found in diesel exhaust. Third, diesel exhaust contains heavy hydrocarbons (HC) that can be difficult to oxidize. The rich/lean modulations in the air to fuel ratio may also contribute to passage of unoxidized HC through the NOx adsorber. To minimize this HC slip through the exhaust system, a diesel oxidation catalyst may be needed downstream of the NOx adsorber. The use of multiple components (i.e., oxidation catalysts, NOx adsorbers, and diesel particulate filter catalysts), however, leads to increased backpressure in the system as well as increased cost.

There thus remains a need for improved NOx adsorbers, particularly those for treatment of diesel exhaust.

SUMMARY OF THE INVENTION

A treatment element for diesel exhaust emissions comprises a substrate having coated thereon a first layer comprising a diesel NOx catalyst comprising an acidic zeolite and less than or equal to about 0.042 grams per cubic inch of an alkaline earth metal; and a second layer comprising a NOx adsorber catalyst comprising a catalytic metal and a carbonate of an alkaline earth metal.

An exhaust emission control device comprises a shell, the disclosed treatment element disposed within the shell, and a retention element disposed between the treatment element and the shell.

One method of making a treatment element for diesel exhaust emissions comprises disposing on a substrate a diesel NOx catalyst comprising an acidic zeolite and less than or equal to about 0.042 grams per cubic inch of an alkaline earth metal; disposing on the substrate a NOx adsorber catalyst comprising a catalytic metal, an acetate of an alkaline earth metal, and a refractory inorganic oxide; and calcining the substrate.

Another method of making a treatment element for diesel exhaust emissions comprises disposing on a substrate a NOx adsorber catalyst comprising a catalytic metal, an acetate of an alkaline earth metal, and a refractory inorganic oxide; disposing on the substrate a diesel NOx catalyst comprising an acidic zeolite and less than or equal to about 0.042 grams per cubic inch of alkaline earth metal; and calcining the substrate.

The above-described and other features will be appreciated and understood by those skilled in the art from the following detailed description, and appended claims.

BRIEF DESCRIPTION OF THE DRAWINGS

Referring now to the figures, wherein like elements are numbered alike in several figures:

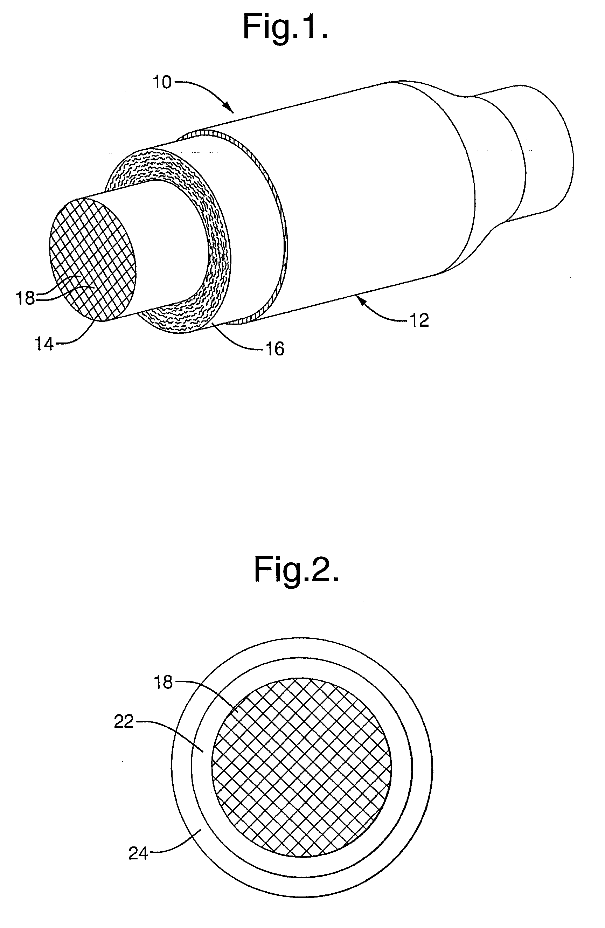

Figure 1 is a partially cut-away cross-sectional perspective view of an exhaust emission control device Figures 2-5 are cut-away cross-sectional perspective views of embodiments of the treatment element of the present disclosure.

DEAILED DESCRIPTION

Exhaust emission control devices may comprise catalytic converters, evaporative emissions devices, scrubbing devices (e.g., those designed to remove hydrocarbon, sulfur, and the like), particulate filters/traps, adsorbers/absorbers, non-thermal plasma reactors, and the like, as well as combinations comprising at least one of the foregoing devices. As shown in Figure 1, an exemplary exhaust emission control device 10 includes an outer metallic housing or shell 12, a treatment element 14, and a retention element 16 disposed therebetween. The treatment element 14 converts, and/or eliminates one or more emissions from an exhaust gas.

The treatment element 14 disclosed herein comprises a new NOx adsorber catalyst formulation comprising a combination of at least one diesel NOx catalyst and at least one NOx adsorber catalyst disposed on a substrate. The diesel NOx catalyst comprises an acidic zeolite and optionally a catalytic metal such as platinum (Pt). The NOx adsorber catalyst comprises a catalytic metal, a refractory inorganic oxide, and optionally a trapping material such as an alkali element, an alkaline earth metal, or a combination thereof. The combination of a diesel NOx catalyst and NOx adsorber catalyst allows for HC and NOx conversions at temperatures of 150°C to about 250°C, much lower than previous NOx adsorber catalysts.

The diesel NOx catalyst provides for improved NOx conversions at low temperatures (e.g., below about 250°C) through utilization of HC for selective NOx reduction. The acidic zeolite in the diesel NOx catalyst can provide acidic sites for the promotion of HC oxidation in the presence of a catalytic metal such as, for example, platinum. The catalytic metal can be present in either the diesel NOx catalyst, in the NOx adsorber catalyst, or both. Improved hydrocarbon oxidation efficiency can result in minimization of the passage of unoxidized hydrocarbons through the treatment element and also decrease the buildup of particulate matter in the treatment element. The new treatment element is thus expected to be more resistant to de-activation in the presence of heavy diesel HC or particulate matter.

The diesel NOx catalyst is also expected to function under conditions of rich to lean air to fuel ratio modulations, thus improving, on average, both NOx and HC conversion. The acidic zeolite in the diesel NOx catalyst is capable of HC storage and release. It is believed that excess HC stored under fuel rich operating conditions will increase the catalyst temperature under fuel lean conditions, thus facilitating the HC combustion that occurs during fuel lean conditions. The increased temperature under fuel lean conditions may also aid in the reduction of NOx in the presence of the catalytic metal.

The diesel NOx catalyst comprises a zeolite. Preferably, the zeolite is capable of retaining its hydrocarbon adsorption capacity after being exposed to the exhaust gas components under temperatures of about -40°C to about 800 °C for about 100,000 miles or more. Preferred zeolites are also capable of adsorbing hydrocarbons preferentially over water when exposed to exhaust gas streams at temperatures up to about 250°C;

and are capable of withstanding accelerated aging conditions, such as exposing a zeolite coated substrate to temperatures up to about 910°C for at least about 50 hours on an engine dynamometer, while still retaining both its adsorption properties at temperatures up to about 850°C and its structural integrity at temperatures up to about 980°C.

Suitable zeolites for the diesel NOx catalyst include acidic zeolites such as the aluminosilicate zeolites having a relatively high silica and low alumina content with the aluminum sites being acidic. The acidity is believed to be due to substitution of $Al^{3+}$ in place of the tetrahedral $Si^{4+}$ in the structure. Preferred silica to alumina molar ratios ($SiO_2/Al_2O_3$) of the zeolite are about 5 moles (i.e., about 5 moles $SiO_2$ per mole $Al_2O_3$) to about 280 moles $SiO_2$ per mole $Al_2O_3$. Within this range, a $SiO_2/Al_2O_3$ molar ratio of greater than or equal to about 30 is preferred, with a $SiO_2/Al_2O_3$ molar ratio of greater than or equal to about 50 being more preferred. Examples of suitable acidic zeolites include ZSM-5, Y zeolite, beta zeolite (commercially available from Zeolyst International), and the like, and combinations comprising one or more of the foregoing zeolites.

The amount or loading of the acidic zeolite on the catalyst substrate is about 0.2 grams per cubic inch ($g/in^3$) to about 2 $g/in^3$ based on the volume of the catalyst substrate. Within this range, a loading of less than or equal to about 1.8 $g/in^3$ is preferred, with less than or equal to about 1.5 $g/in^3$ more preferred. Also preferred within this range is a loading of greater than or equal to about 0.7 $g/in^3$, with greater than or equal to about 1.2 $g/in^3$ more preferred.

The diesel NOx catalyst preferably comprises no added alkaline earth metals (e.g., barium) except possibly for those added as impurities in the other components. By no added alkaline earth metals, it is meant that the diesel NOx catalyst comprises less than or equal to about 0.041 $g/in^3$, preferably less than or equal to about 0.02 $g/in^3$.

The diesel NOx catalyst, the NOx adsorber catalyst, or both, comprises a catalytic metal. Suitable catalytic metals include, for example, platinum, palladium, rhodium, iridium, osmium, ruthenium, and the like, as well as oxides, alloys, and combinations comprising one or more of the foregoing catalytic metal components. Preferred noble metals include platinum.

The catalytic metal can be loaded on the catalyst substrate at about 30 grams per cubic foot ($g/ft^3$) to about 200 $g/ft^3$ based on the volume of the catalyst substrate. Within this range, a loading of less than or equal to about 140 $g/ft^3$ is preferred, with less than or equal to about 120 $g/ft^3$ more preferred. Also preferred within this range is a loading of greater than or equal to about 40 $g/ft^3$, with greater than or equal to about 80 $g/ft^3$ more preferred.

The NOx adsorber catalyst also comprises a trapping component such as, for example, an alkaline earth metal compound, an alkali element component, or a combination comprising one or more of the foregoing compounds. Suitable alkaline earth metal compounds include, for example, carbonates of barium, strontium, calcium, magnesium, and the like, and combinations comprising one or more of the foregoing alkaline earth metal compounds. Suitable alkali element components include, for example, cesium, potassium, sodium, lithium, and the like, as well as oxides, carbonates, and combinations comprising one or more of the foregoing alkali element components. Preferred alkali element components are carbonates, such as, for example, potassium carbonate. In one preferred embodiment, the NOx adsorber catalyst comprises barium carbonate and is free from added sodium, potassium and cesium. In this embodiment, the NOx adsorber catalyst can have excellent HC oxidation properties. In another preferred embodiment, the NOx adsorber catalyst comprises barium carbonate and one or more of sodium, potassium and cesium. In this embodiment, the NOx adsorber catalyst has good NOx storage capacity and NOx conversion at temperatures of 300°C to 500°C.

The alkaline earth metal can be loaded on the catalyst substrate at about 0.1 grams per cubic inch (g/in$^3$) to about 1 g/in$^3$ based on the volume of the catalyst substrate. Within this range, a loading of less than or equal to about 0.9 g/in$^3$ is preferred, with less than or equal to about 0.7 g/in$^3$ more preferred. Also preferred within this range is a loading of greater than or equal to about 0.3 g/in$^3$, with greater than or equal to about 0.5 g/in$^3$ more preferred. The alkali element component, when employed, can be loaded on the catalyst substrate at about 0.02 grams per cubic inch (g/in$^3$) to about 0.3 g/in$^3$ of the catalyst substrate. Within this range, a loading of less than or equal to about 0.25 g/in$^3$ is preferred, with less than or equal to about 0.18 g/in$^3$ more preferred. Also preferred within this range is a loading of greater than or equal to about 0.05 g/in$^3$, with greater than or equal to about 0.1 g/in$^3$ more preferred.

The NOx adsorber catalyst also comprises a refractory inorganic oxide. The refractory inorganic oxide component preferably comprises an inorganic oxide having thermal stability at temperatures up to about 1000°C. Suitable refractory inorganic oxide components include, for example, delta alumina, silica-doped alumina, titanium oxide, zirconium oxide, lanthanum oxide, cerium oxide, and mixtures comprising one or more of the foregoing refractory inorganic oxides.

The refractory inorganic oxide can be loaded onto the catalyst substrate at about 0.2 grams per cubic inch (g/in$^3$) to about 6 g/in$^3$ of the catalyst substrate. Within this range, a loading of less than or equal to about 6 g/in$^3$ is preferred, with less than or equal to about 5 g/in$^3$ more preferred. Also preferred within this range is a loading of greater than or equal to about 3 g/in$^3$, with greater than or equal to about 4 g/in$^3$ more preferred.

The NOx adsorber catalyst preferably comprises no added zeolite. The amount of zeolite in the NOx adsorber catalyst is preferably less than or equal to about 0.05 g/in$^3$.

The substrate 18 preferably comprises a material designed for use in a spark ignition or diesel engine environment and having the following characteristics: (1) capable of operating at temperatures up to about 600°C, and up to about 1,000°C for some applications, depending upon the device's location within the exhaust system (manifold mounted, close coupled, or underfloor) and the type of system (e.g., gasoline or diesel); (2) capable of withstanding exposure to hydrocarbons, nitrogen oxides, carbon monoxide, particulate matter (e. g., soot and the like), carbon dioxide, and/or sulfur; and (3) having sufficient surface area and structural integrity to support a catalyst. Some possible materials include cordierite, silicon carbide, metal, metal oxides (e.g., alumina, and the like), glasses, and the like, and mixtures comprising at least one of the foregoing materials. Some ceramic materials include "Honey Ceram", commercially available from NGK-Locke, Inc, Southfield, Michigan, and "Celcor", commercially available from Coming, Inc., Coming, New York. These materials can be in the form of foils, preforms, mats, fibrous materials, monoliths (e. g., a honeycomb structure, and the like), other porous structures (e.g., porous glasses, sponges), foams, pellets, particles, molecular sieves, and the like (depending upon the particular device), and combinations comprising one or more of the foregoing materials and forms, e. g., metallic foils, open pore alumina sponges, and porous ultra-low expansion glasses. Furthermore, these substrates can be coated with oxides and/or hexaaluminates, such as stainless steel foil coated with a hexaaluminate scale.

Although the substrate 18 size and geometry are not critical, the size and geometry are preferably chosen to optimize surface area in the given exhaust emission control device design parameters. Typically, the substrate 18 has a honeycomb geometry, with the combs through-channel having a multi-sided or rounded shape, with substantially square, triangular, hexagonal, or similar geometries preferred due to ease of manufacturing and increased surface area. The substrate 18 preferably comprises a single unit or brick.

To form the treatment element 14, the diesel NOx catalyst and the NOx adsorber catalyst are applied to the substrate. One or more catalyst slurries comprising the various catalyst components are formed for application to the substrate. In addition to the zeolite, catalytic metal, alkaline earth metals, alkali elements and refractory inorganic oxides described above, the catalyst slurries may also comprise stabilizers and binder materials to enhance adhesion. The catalyst slurry or slurries are applied the substrate by wash coating, imbibing, impregnating, physisorbing, chemisorbing, precipitating, or otherwise applying to the catalyst substrate by such techniques as spraying, dipping or painting, for example. The catalyst slurry is applied in a manner using standard catalyst coating methods known to those skilled in the art. After application, the catalyst slurry is calcined at a temperature of about 300°C to about 600°C for a time of about 1 to about 5 hours to fix the catalyst on the substrate.

The catalyst can comprise a carbonate or an oxide of, for example, an alkaline earth metal such as barium. Because barium carbonate and barium oxide are relative insoluble in the catalyst slurry, these components are typically added to the slurry as precursors that are converted to the carbonate or oxide form upon calcination. In the method of making the catalyst comprising an alkaline earth metal carbonate or an alkali element carbonate, an alkaline earth metal acetate or an alkali element acetate is employed in the catalyst slurry. In general, the acetate forms have higher solubilities in a slurry than the carbonate forms. For example, barium acetate has a solubility of about 58.8 grams per 100 milliliters of water, while barium carbonate is nearly insoluble in water. Upon calcination to form a treatment element, the acetate is decomposed to form carbonate as illustrated below for barium acetate:

$$Ba(CH_3COOH)_2 + O_2 \rightarrow BaCO_3 + 3H_2O + CO_2$$

Similarly, a barium hydroxide precursor in the slurry can be decomposed during calcination to form barium oxide as illustrated below:

$$Ba(OH)_2 \rightarrow BaO + \tfrac{1}{2}H_2O$$

Compared to barium acetate, however, barium hydroxide has a much lower solubility of about 5.6 grams per 100 milliliters of water. One advantage of using acetate is that the good solubility of the acetate compared to the hydroxide allows suitable catalyst loadings to be achieved. When barium acetate is employed, the desired catalyst loading can be achieved in a single impregnation step. When barium hydroxide is employed, however, several impregnation steps may be necessary to achieve the desired catalyst loading. Another disadvantage of barium hydroxide is that when decomposed to form barium oxide, the barium oxide is in equilibrium with the barium hydroxide when water vapor is present. This equilibrium behavior can result in catalyst mobility in the presence of steam in the exhaust gas. Overall, the use of an acetate compound in the slurry to form a carbonate compound offers several advantages over using a hydroxide compound to form an oxide.

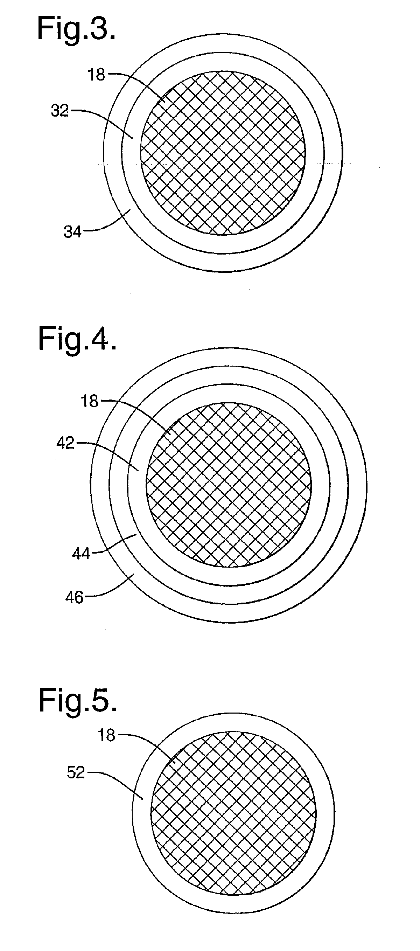

The diesel NOx catalyst and the NOx adsorber catalyst may be disposed on the substrate 14 as separate layers or as a single layer. In one embodiment, the diesel NOx catalyst is disposed on the substrate 18 and the NOx adsorber catalyst is disposed on the diesel NOx catalyst. This arrangement where the substrate 18 comprises a diesel NOx catalyst underlayer 22 and a NOx adsorber catalyst overlayer 24 is shown schematically in Figure 2. In another embodiment, the NOx adsorber catalyst is disposed the substrate 18 and the diesel NOx catalyst is disposed on the NOx adsorber catalyst. This arrangement where the substrate comprises a NOx adsorber catalyst underlayer 32 and a diesel NOx catalyst overlayer 34 is illustrated in Figure 3.

In another embodiment, a first NOx adsorber catalyst is disposed on the substrate 18, a diesel NOx catalyst is disposed on the first NOx adsorber catalyst, and a second NOx adsorber catalyst is disposed on the diesel NOx catalyst. This arrangement where the substrate comprises a first NOx adsorber catalyst underlayer 42, a diesel NOx catalyst midlayer 44, and a second NOx adsorber overlayer 46 is illustrated in Figure 4. The first and second NOx adsorber catalysts may be the same or different.

In yet another embodiment, the diesel NOx catalyst and the NOx adsorber catalyst are applied to the substrate 18 as a single layer, preferably as a single slurry. This arrangement where the substrate 18 comprises a single layer 52 comprising both a diesel NOx catalyst and a NOx adsorber catalyst is illustrated in Figure 5.

After the treatment element 14 is formed, it may then be assembled along with the outer shell 12, and retention element 16 to form an exhaust emission control device 10.

An exhaust emission control device shell 12 is a protective metal layer that is disposed around the treatment element 14 and retention element 16. The shell is of a shape and size that is suitable to contain the catalyst and to protect it from such operating conditions as severe mechanical shocks. The choice of material for the shell depends upon the type of exhaust gas, the maximum temperature reached by the catalyst substrate, the maximum temperature of the exhaust gas stream, and the like. Suitable materials for the shell comprise materials that are capable of resisting undercar salt, temperature and corrosion. Typically, ferrous materials are employed such as ferritic stainless steels. Ferritic stainless steels can include stainless steels such as, e.g., the 400 - Series such as SS-409, SS-439, and SS-441, with grade SS-409 generally preferred.

Located between the shell 12 and the treatment element 14 is a retention element 16. The function of the retention element is to hold the catalyst substrate in place and, in some instances, to insulate the shell from the heat of the substrate during operation. The retention material can either be an intumescent material (e.g., one which contains ceramic materials, and other conventional materials such as organic binders and the like, or combinations comprising one or more of the foregoing materials, and a vermiculite component that expands with heating to maintain firm uniform compression, or non-uniform compression, if desired) or a non-intumescent material, as well as materials which include a combination of both.

The retention element 16 is typically concentrically disposed around the treatment element 14 to form a retention element 16/treatment element 14 subassembly. The retention element 16/treatment element 14 subassembly can be concentrically disposed within a shell or housing 12. The choice of material for the shell 12 depends upon the type of exhaust gas, the maximum temperature reached by the treatment element 14, the maximum temperature of the exhaust gas stream, and the like. Suitable materials for the shell include materials capable of resisting under-car salt, temperature, and corrosion. Typically, ferrous materials are employed such as ferritic stainless steels. Ferritic stainless steels can include stainless steels such as, e.g., the 400 - Series such as SS-409, SS-439, and SS-441, with grade SS-409 generally preferred.

Also, similar materials as the housing, end cone(s), end plate(s), exhaust manifold cover(s), and the like, can be concentrically fitted about the one or both ends and secured to the housing to provide a gas tight seal. These components can be formed separately (e.g., molded or the like), or can be formed integrally with the housing using a methods such as, e.g., a spin forming, or the like.

The exhaust emission control device 10 can be manufactured by one or more techniques, and, likewise, the retention element 16/treatment element 14 subassembly can be disposed within the shell 12 using one or more methods. For example, the retention element 16/treatment element 14 subassembly can be inserted into a variety of shells 12 using a stuffing cone. The stuffing cone is a device that compresses the retention material concentrically about the treatment element 14. The stuffing cone then stuffs the compressed retention element 16/treatment element 14 subassembly into the shell 12, such that an annular gap preferably forms between the treatment element 14 and the interior surface of the shell 12 as the retention material becomes compressed about the treatment element. Alternatively, if the retention material is in the form of particles (e.g., pellets, spheres, irregular objects, or the like) the treatment element 14 can be stuffed into the shell and the retention material can be disposed in the shell 12 between the treatment element and the shell.

In an alternative method, for example, the shell 12 can comprise two half shell components, also known as clamshells. The two half shell components are compressed together about the retention element 16/treatment element 14 subassembly, such that an annular gap preferably forms between the treatment element and the interior surface of each half shell as the retention material becomes compressed about the treatment element 14.

In yet another method for forming the exhaust emission control device 10, the shell 12 can have a non-circular cross-sectional geometry (e.g., oval, oblong, and the like). Such non-circular shell 12 designs are preferably manufactured by employing a half shell, preferably a die formed clamshell, which, when combined with another half, can form the desired non-circular geometry. The retention element 16/treatment element 14 subassembly can be placed within one of the half shells. The other half shell can then be attached to that half shell, such that an annular gap preferably forms between the treatment element and the interior surface of each half shell (i.e., the area comprising the retention material). The half shells can be welded together, preferably using a roller seam welding operation.

The "tourniquet" method of forming the exhaust emission control device comprises wrapping the shell 12 (e.g., in the form of a sheet) around the retention element 16/treatment element 14 subassembly. The adjoining edges of the shell 12 are welded together while the assembly is squeezed at rated pressures calculated to optimize the retention material density. The endcones/end-plates or the like, are then welded to the shell 12 to form the exhaust emission control device 10. Although this method also has the disadvantages of increased cost due to the number of components that have to be processed and the added cost of welding wires and gases, it claims improved retention material density control.

In all of the above methods, the ends of the shell 12 can be sized, e.g., using a spinform method, to form a conical shaped inlet and/or a conical shaped outlet, thus eliminating the need for separate endcone assemblies in at least one embodiment of the exhaust emission control device. In the alternative, one or both ends of the shell can also be sized so that an end cone, an end plate, an exhaust gas manifold assembly, or other exhaust system component, and combinations comprising at least one of the foregoing components, can be attached to provide a gas tight seal.

The treatment element 14 described herein contains both a diesel NOx catalyst comprising a zeolite and a NOx adsorber catalyst, wherein one or both catalysts comprises a catalytic metal. The treatment element is particularly useful in applications requiring rich and lean modulations. The diesel NOx catalyst facilitates HC oxidation, including heavy HC oxidation, and also aids in the reduction of particulate matter build up. The use of zeolite in the diesel NOx catalyst allows for utilization of HC for NOx reduction as follows. The diesel NOx catalyst can store HC during operation in fuel rich conditions. Under fuel lean conditions, the stored HC will combust thus increasing the operating temperature of the NOx adsorber catalyst and facilitating the reduction of NOx by the NOx adsorber catalyst. The proximity of the platinum and the barium carbonate allows for NOx storage and reduction under conditions of rich and lean cycling.

One advantage of this new treatment element is that the exhaust emission control device comprising the treatment element can be used in many configurations from one with a single exhaust emission control device to one with several exhaust emission control devices in fluid communication with an exhaust stream. In an advantageous configuration, the disclosed exhaust emission control device can be used as the first device in an exhaust system, i.e., closest to the engine. In this configuration, the exhaust emission control device can take advantage of the higher temperatures closer to the engine. Downstream of the new exhaust emission control device can optionally be additional devices to improve the conversion of HC, NOx and CO (e.g., oxidation catalysts, diesel particulate filters, etc.). The disclosed exhaust emission control device allows for simplification of exhaust systems and cost savings by improving HC oxidation and the utilization of HC for NOx reduction in the catalyst formulation. Another advantage is that the disclosed treatment element can even control NOx at temperatures of about 150°C to about 250°C.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A treatment element (14) for diesel exhaust emissions comprising a substrate (18) having coated thereon:

   a first layer comprising a diesel NOx catalyst comprising an acidic zeolite and less than or equal to about 0.042 grams per cubic inch of an alkaline earth metal; and
   a second layer comprising a NOx adsorber catalyst comprising a catalytic metal and a carbonate of an alkaline earth metal.

2. The treatment element of Claim 1, wherein the NOx adsorber comprises less than or equal to about 0.05 grams per cubic inch of the zeolite.

3. The treatment element of Claim 1, wherein the first layer is an underlayer (22) and the second layer is an overlayer (24).

4. The treatment element of Claim 1, wherein the second layer is an underlayer (32) and the first layer is an overlayer (34).

5. The treatment element of Claim 1, wherein the acidic zeolite is ZSM-5 zeolite, Y zeolite, beta zeolite, or a combination comprising one or more of the foregoing zeolites.

6. The treatment element of Claim 1, wherein the acidic zeolite is present on the substrate (18) at about 0.2 grams per cubic inch to about 2 grams per cubic inch based on the total volume of the substrate.

7. The treatment element of Claim 1, wherein the alkaline earth metal of the second layer is barium, strontium, calcium, magnesium, or a combination comprising one or more of the foregoing metals.

8. The treatment element of Claim 7, wherein the NOx adsorber catalyst further comprises an alkali element selected from the group consisting of sodium, potassium, cesium, or a mixture of one or more of the foregoing alkali elements.

9. The treatment element of Claim 8, wherein the alkali element is potassium carbonate.

10. The treatment element of Claim 1, wherein the catalytic metal comprises platinum.

11. The treatment element of Claim 4, further comprising a third layer comprising a second NOx adsorber catalyst disposed on the first layer as an overlayer (46), wherein the second NOx adsorber catalyst comprises a catalytic metal.

12. An exhaust emission control device comprising a shell (12), the treatment element (14) of Claim 1 disposed within the shell (12), and a retention element (16) disposed between the treatment element (14) and the shell (12).

13. A method of making a treatment element (14) for diesel exhaust emissions, comprising:

    disposing on a substrate (18) a diesel NOx catalyst comprising an acidic zeolite and less than or equal to about 0.042 grams per cubic inch of alkaline earth metal;
    disposing on the substrate (18) a NOx adsorber catalyst comprising a catalytic metal, an acetate of an alkaline earth metal, and a refractory inorganic oxide; and
    calcining the substrate.

14. The method of Claim 13, wherein the acidic zeolite is present on the substrate (18) at about 0.2 grams per cubic inch to about 2 grams per cubic inch.

15. The method of Claim 13, wherein the alkaline earth metal is barium, strontium, calcium, magnesium or a combination comprising one or more of the foregoing metals.

**16.** The method of Claim 15, wherein the NOx adsorber catalyst further comprises an alkali element selected from the group consisting of sodium, potassium, cesium, and mixtures of one or more of the foregoing alkali elements.

**17.** A method of making a treatment element (14) for diesel exhaust emissions, comprising:

disposing on a substrate (18) a NOx adsorber catalyst comprising a catalytic metal, an acetate of an alkaline earth metal, and a refractory inorganic oxide;
disposing on the substrate (18) a diesel NOx catalyst comprising an acidic zeolite and less than or equal to about 0.042 grams per cubic inch of alkaline earth metal; and
calcining the substrate.

**18.** The method of Claim 17, wherein the acidic zeolite is ZSM-5 zeolite, Y zeolite, beta zeolite, or a combination comprising one or more of the foregoing zeolites.

**19.** The method of Claim 17, wherein the acidic zeolite is present on the substrate (18) at about 0.2 grams per cubic inch to about 2 grams per cubic inch based on the total volume of the substrate.

**20.** The method of Claim 17, wherein the alkaline earth metal is barium, strontium, calcium, magnesium, or a combination comprising one or more of the foregoing metals.

**21.** The method of Claim 20, wherein the NOx adsorber catalyst further comprises an alkali element selected from the group consisting of sodium, potassium, cesium, and mixtures of one or more of the foregoing alkali elements.

**22.** The method of Claim 19, further comprising disposing a second NOx adsorber catalyst on the substrate, wherein the second NOx adsorber catalyst comprises a catalytic metal.

# Fig.1.

# Fig.2.

Fig.3.

18

32

34

Fig.4.

18

42

44

46

Fig.5.

18

52

**European Patent Office**

**EUROPEAN SEARCH REPORT**

Application Number

EP 04 07 6562

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 935 055 A (NISSAN MOTOR) 11 August 1999 (1999-08-11) * page 5, line 20 - page 6, line 20; figures 1-3; table 1 * | 1-22 | B01D53/94 |
| X | EP 1 008 378 A (MAZDA MOTOR) 14 June 2000 (2000-06-14) * page 2, line 53 - page 3, line 25 * * page 4, line 23 - line 57 * * page 6, line 18 - line 24 * * page 9, line 31 - page 10, line 15; figures 1,17 * | 1-22 | |
| X | EP 0 896 134 A (MAZDA MOTOR) 10 February 1999 (1999-02-10) * page 2, line 33 - page 3, line 22 * * page 4, line 12 - line 38; figure 1 * | 1-22 | |
| X | WO 02/053885 A (JOHNSON MATTHEY PLC ; BENNETT CHRISTOPHER JOHN (US); LAFYATIS DAVID SC) 11 July 2002 (2002-07-11) * page 2, line 1 - line 10 * * page 4, line 8 - line 31 * * page 7, line 5 - line 7 * | 1-22 | TECHNICAL FIELDS SEARCHED (Int.Cl.7) B01D |
| A | WO 97/43031 A (ENGELHARD CORP) 20 November 1997 (1997-11-20) * page 12, line 11 - line 25 * * page 16, line 23 - page 17, line 17 * * page 18, line 21 - page 19, line 19 * | 1-22 | |

The present search report has been drawn up for all claims

| Place of search | Date of completion of the search | Examiner |
|---|---|---|
| Munich | 8 September 2004 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 04 07 6562

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2004

| Patent document cited in search report | | Publication date | Patent family member(s) | | Publication date |
|---|---|---|---|---|---|
| EP 0935055 | A | 11-08-1999 | JP | 11221466 A | 17-08-1999 |
| | | | JP | 2000135419 A | 16-05-2000 |
| | | | EP | 0935055 A2 | 11-08-1999 |
| EP 1008378 | A | 14-06-2000 | JP | 2000176298 A | 27-06-2000 |
| | | | EP | 1008378 A1 | 14-06-2000 |
| | | | US | 6432859 B1 | 13-08-2002 |
| EP 0896134 | A | 10-02-1999 | JP | 3424557 B2 | 07-07-2003 |
| | | | JP | 11107740 A | 20-04-1999 |
| | | | DE | 69814261 D1 | 12-06-2003 |
| | | | DE | 69814261 T2 | 11-03-2004 |
| | | | EP | 0896134 A2 | 10-02-1999 |
| | | | ES | 2199393 T3 | 16-02-2004 |
| | | | US | 6141960 A | 07-11-2000 |
| WO 02053885 | A | 11-07-2002 | EP | 1348069 A1 | 01-10-2003 |
| | | | WO | 02053885 A1 | 11-07-2002 |
| | | | JP | 2004517247 T | 10-06-2004 |
| | | | US | 2004103651 A1 | 03-06-2004 |
| WO 9743031 | A | 20-11-1997 | US | 6471924 B1 | 29-10-2002 |
| | | | AU | 2430597 A | 05-12-1997 |
| | | | BR | 9709239 A | 10-08-1999 |
| | | | CN | 1218420 A | 02-06-1999 |
| | | | DE | 19781766 T0 | 08-04-1999 |
| | | | JP | 2000510762 T | 22-08-2000 |
| | | | KR | 2000010979 A | 25-02-2000 |
| | | | WO | 9743031 A2 | 20-11-1997 |
| | | | ZA | 9703161 A | 22-10-1997 |

EPO FORM P0459

For more details about this annex : see Official Journal of the European Patent Office, No. 12/82